(19) Europäisches Patentamt / European Patent Office / Office européen des brevets

(11) **EP 2 348 335 A1**

(12) **EUROPEAN PATENT APPLICATION**

(43) Date of publication:
**27.07.2011 Bulletin 2011/30**

(51) Int Cl.:
***G01S 19/13*** *(2010.01)*

(21) Application number: **10275005.6**

(22) Date of filing: **22.01.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR** | (72) Inventor: **The designation of the inventor has not yet been filed** |
| (71) Applicant: **Astrium Limited**<br>**Stevenage, Hertfordshire, SG1 2AS (GB)** | (74) Representative: **Bruce, Alexander Richard Henry et al**<br>**Venner Shipley LLP**<br>**20 Little Britain**<br>**London EC1A 7DH (GB)** |

(54) **A receiver and method for authenticating satellite signals**

(57) A receiver (10) is configured to authenticate received satellite signals (12) having a carrier wave carrying positioning data. The receiver comprises a processor arrangement configured to analyse the carrier wave to determine an apparent acceleration between the satellite and receiver. The processor arrangement is also configured to compare the apparent acceleration between the satellite and receiver with a threshold value to determine if the satellite signal is authentic.

FIG. 1

EP 2 348 335 A1

**Description**

**Description**

The present invention relates to a receiver for authenticating a received satellite signal. The present invention also relates to a method of authenticating a received satellite signal.

A receiver for a global navigation satellite system (GNSS) is well known. A GNSS receiver obtains satellite signals from a plurality of satellites, and calculates position based on the positioning data encoded in the satellite signal.

Known GNSS receivers may be vulnerable to satellite signals which are false or corrupted. The satellite signal may be unintentionally erroneous, or may include a deliberate error. In particular, a GNSS receiver may receive a "spoof" signal which is intended to mimic an authentic satellite signal. The spoof signal may deliberately provide false positioning data to the receiver.

GNSS receivers are increasingly used for safety of life applications or liability critical services. These uses require position to be determined with a very high reliability. In addition, such uses may require a notification if the calculated position is not reliable, e.g. because of a spoofed or corrupted satellite signal.

The present invention provides, in a first aspect, a receiver configured to authenticate received satellite signals having a carrier wave carrying positioning data, the receiver comprising: a processor arrangement configured to analyse the carrier wave to determine an apparent acceleration between the satellite and receiver, and the processor arrangement is further configured to compare the apparent acceleration between the satellite and receiver with a threshold value to determine if the satellite signal is authentic.

The present invention provides, in a second aspect, a method of authenticating a received satellite signal having a carrier wave carrying positioning data, comprising:

analysing the carrier wave to determine an apparent acceleration between the satellite and receiver, and comparing the apparent acceleration between the satellite and receiver with a threshold value to determine if the satellite signal is authentic.

Thus, the receiver and method authenticate a received satellite signal.

An embodiment of the present invention will now be described, by way of example only, with reference to the accompanying drawings in which:

Figure 1 is a schematic view of part of a global navigation satellite system including a receiver according to the present invention;
Figure 2 is a graph showing an analysis of an example set of satellite signals;
Figure 3 is a graph showing a further analysis of the satellite signals of Figure 2; and
Figure 4 is a graph showing an enlarged view of part of Figure 3.

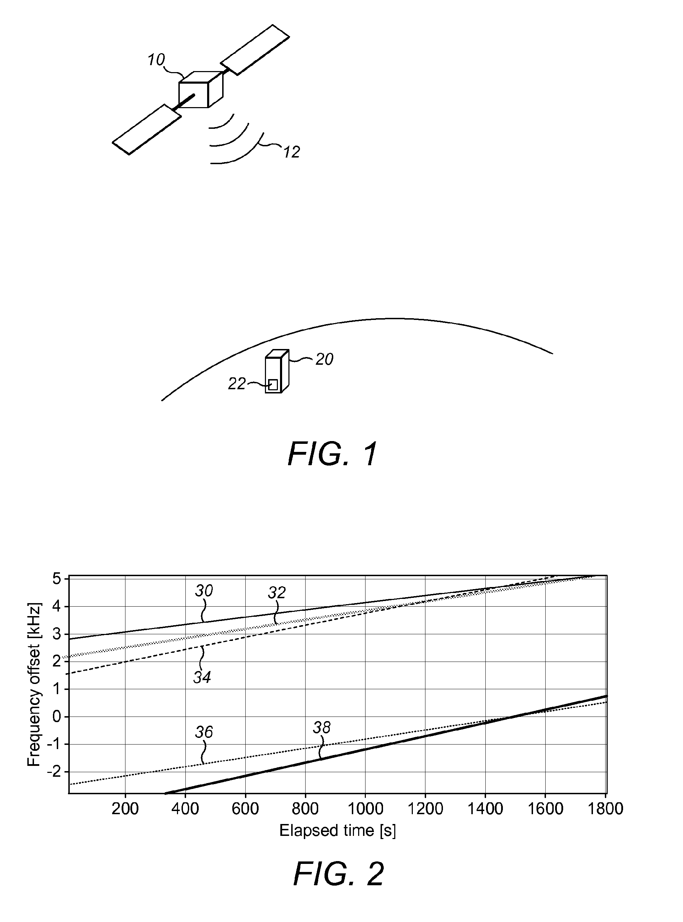

Figure 1 shows a simplified part of a global navigation satellite system. A satellite 10 is typically in a medium earth orbit. The satellite 10 transmits satellite signals 12. The satellite signals 12 comprise a carrier wave having a predetermined and known frequency. The carrier wave carries positioning data. The positioning data is encoded using a pseudorandom number (PRN) code. The PRN code used is unique to that satellite in the system.

The positioning data in the satellite signal provides a precise time. This precise time is known to be used to calculate the position of the receiver 20. The positioning data also includes an almanac and an ephemeris which provides the receiver with the position of the satellite 10. The receiver 20 can generate a partial position by calculating the distance to a satellite using the time taken for the satellite signal to reach the receiver and the location of the satellite.

Typically, at least four satellites are required in order to accurately fix the position of the receiver 20 in three dimensional space. The receiver 20 may receive transmissions from more than four satellites 10. The receiver 20 may be at or near the surface of the earth, or may be above the surface of the earth, e.g. in an aircraft.

The receiver 20 preferably comprises a processor arrangement configured to receive the positioning data from the plurality of satellites, and calculate the current position of the receiver 20. The calculation of position by a GNSS receiver is well known in the art, and so will not be described in detail here.

The processor arrangement 22 is further configured to determine an apparent relative acceleration in the range between the receiver 20 and each satellite 10. The processor arrangement 22 receives part or all of the satellite signals from the plurality of satellites. The apparent relative acceleration in range is determined only from the received satellite signal for each satellite used to calculate position. The calculated relative acceleration is termed as an "apparent" relative acceleration because the calculated term may include false or erroneous data. The present invention recognises that a deliberate spoofing signal, or an error, may be identified as an acceleration in range which exceeds a threshold value.

The receiver 20 determines the apparent relative acceleration between the satellite 10 and receiver 20, and a predicted relative acceleration between the satellite 10 and receiver 20. The difference between the measured and predicted relative accelerations is determined, and is termed the offset relative acceleration. The offset acceleration of the satellite 10 is expected to be near zero for an authentic satellite signal.

The receiver 20 can record its change in position over a period of time. A change in position with time is the velocity of the receiver 20. It is well known to calculate a velocity or speed from a series of positions, for example, by dividing the change in position in a time interval by that time interval. The receiver 20 calculates its own predicted velocity from the positioning signals received from the satellites.

The receiver 20 also calculates its predicted acceleration from the positioning data in the satellite signals. Acceleration is well known to be the change of velocity of the receiver 20 with time. The acceleration of the receiver 20 is therefore the second derivative of the position with respect to time. The acceleration of the receiver 20 may be calculated as the change in velocity of the receiver 20 over a time interval, divided by that time interval. The acceleration of the receiver 20 is determined from the received satellite signals only. The receiver 20 therefore does not require an accelerometer attached to the receiver in order to determine acceleration.

The receiver 20 calculates a predicted velocity and acceleration of the satellite from the satellite signals received. The satellite signals include positioning data describing the orbit of the satellite, namely, the almanac and ephemeris. In particular, the ephemeris includes information about the precise orbit the satellite is following. The receiver is configured to analyse the satellite positioning data, and calculate the expected velocity and acceleration of the satellite.

The predicted velocity and accelerations of the satellite and receiver can be combined to determine the predicted relative acceleration between the satellite and receiver.

The term "predicted" does not require the prediction of velocity or acceleration of the receiver or satellite to be for a future time. The prediction refers to an expected velocity or acceleration, based on calculations or measurements other than a direct measurement of the range-acceleration. The predicted acceleration may be calculated for a past time, or for a future time.

The predicted relative acceleration may also include one or more terms corresponding to a predicted error. The predicted errors may include a drift and/or acceleration in the receiver clock timing, satellite clock drift and/or acceleration, ionospheric delay rate, tropospheric delay rate, error in satellite velocity and/or acceleration derivation and receiver system noise. These errors may be predicted by measurement, derived from models or predetermined terms.

The predicted relative range-acceleration between a satellite and receiver, $\ddot{\Phi}predicted$ , is calculated from:

$$\ddot{\Phi}_{predicted} = \dot{h}_r^s(v_r - V^s) + h_r^s(a_r - A^s) + d\ddot{T}_r + \ddot{\varepsilon}_r^{\,s}$$

Where $h^s{}_r$ represents the directional cosine vector between the receiver and satellite, $v_r$ and $a_r$ represent the predicted receiver velocity and acceleration vectors, and $V^s$ and $A^s$ represent the predicted satellite velocity and accel-eration vectors. The term $d\ddot{T}r$ represents the predicted acceleration in the receiver clock timing. The term $\ddot{\varepsilon}_r^{\,s}$ represents any additional error or factor affecting the acceleration, for example, from one or more of the errors above.

The above equation provides the predicted range-acceleration along the vector between the satellite and receiver, which equates to the direction the measured range-acceleration is determined along. The equation therefore takes into account the geometry of the satellite system, including a centrifugal correction term $\dot{h}^s{}_r$ ($v_r$ - $V^s$) .

The receiver processor arrangement is further configured to determine whether the apparent offset acceleration in range of the satellite 10 exceeds a threshold value. If the apparent acceleration of the satellite 10 exceeds the threshold value, the satellite signals from that satellite 10 are considered to be non-authentic or erroneous. The signals from that satellite 10 can then be disregarded if appropriate. The receiver 20 may continue to obtain an accurate position by using signals from other satellites. Alternatively or in addition, the receiver 20 may generate an output indicating the signal from the relevant satellite is non-authentic or erroneous. The receiver 20 may also generate an output indicating whether an accurate position can still be determined, or whether an accurate position can no longer be determined.

For a satellite 10 in medium earth orbit, the expected acceleration is relatively low. The acceleration of an authentic satellite 10 is approximately zero, although detection of small accelerations as noise are to be expected.

The receiver 20 samples the range acceleration at a relatively high rate. In particular, the receiver 20 calculates range acceleration at least three times per second, and more preferably, at least five times per second. The high sampling rate ensures that accelerations due to movement of the satellite or receiver are lower than the threshold value indicating a non-authentic signal.

A receiver 20 may be located in a vehicle, such as an automobile or an aircraft. The receiver 20 will be accelerated relative to the satellite 10 by the vehicle motion. The relatively small time between samples of range acceleration ensures that each of the series of accelerations recorded are relatively small, and below the threshold value.

The threshold value may be a predetermined value. The predetermined value is preferably selectable or configurable, or may be fixed. The threshold value may dynamically change depending on the magnitude of noise during a calibration period.

The receiver 20 measures the apparent relative acceleration between the satellite 10 and receiver 20 using only received satellite signals. In particular, the receiver 20 generates the apparent relative acceleration by analysing the carrier wave and positioning data in the satellite signal. This analysis will now be described in more detail.

The receiver processor arrangement 22 is configured to analyse the carrier wave of the satellite signals. The receiver 20 determines a count of the number of wave cycles of the carrier wave over a time interval. The number of wave cycles may be an integer number of cycles, and preferably also determines a fraction of a cycle transmitted within the time interval.

The time interval is accurately determined from the timing data in the satellite signal, and encoded in a PRN code. This approach has the advantage that the absolute number of wave cycles occurring in the transmission from the satellite is not required. Complex techniques such as Real Time Kinematics (RTK) exist which can estimate the absolute number of wave cycles. A preferred embodiment of the present invention does not require such a calculation.

The receiver 20 records the number of wave cycles of the carrier wave in a time interval. A change in number of wave cycles in the time interval can be readily equated with a change in relative range between the satellite 10 and receiver 20 in the time interval. In particular, range change is equal to the change in a number of wave cycles multiplied by the wavelength of the carrier wave. The range and number of wave cycles can be considered as related quantities, since one can be readily converted to the other. The calculations described can be carried out on any related quantity.

The wavelength of the carrier wave is approximately constant, and is well known for each transmitted signal from each type of global navigation satellite system (GNSS). It is noted that certain GNSS transmit signals at multiple wavelengths, however each wavelength is well known. The nominal wavelength may be used in the analysis, or a measured wavelength may be used. The change in number of cycles can also be referred to as the phase shift of the carrier wave.

Figure 2 shows a graph of frequency offset against time for five satellite signals 30,32,34,36,38. Each satellite signal 30,32,34,36,38 operates using a different PRN code. The frequency offset corresponds to relative velocity between the satellites and receiver, i.e. change in recorded phase with time. Signals 30,32,34 have a positive frequency offset indicating the satellites 30,32,34 and receiver are moving towards each other. Signals 36,38 have a negative frequency offset indicating the satellites 30,32,34 and receiver are moving apart. This frequency shift is commonly termed the Doppler effect. All of the satellite signals 30,32,34,36,38 has a frequency offset which is increasing over time, indicating a non-zero acceleration. The frequency offsets shown in Figure 2 are the measured frequency offsets, and do not take into account the predicted velocities of the satellites or receiver.

The signal 30 has been modified at a time of 1000s. This modification may be due to a spoofing signal or an error. The spoofing signal or an error has substantially the same frequency offset as the signal 30 prior to a time of 1000s, and the same rate of increase in frequency offset after the time 1000s. The modification is not readily detectable from an analysis of relative velocity shown in Figure 2.

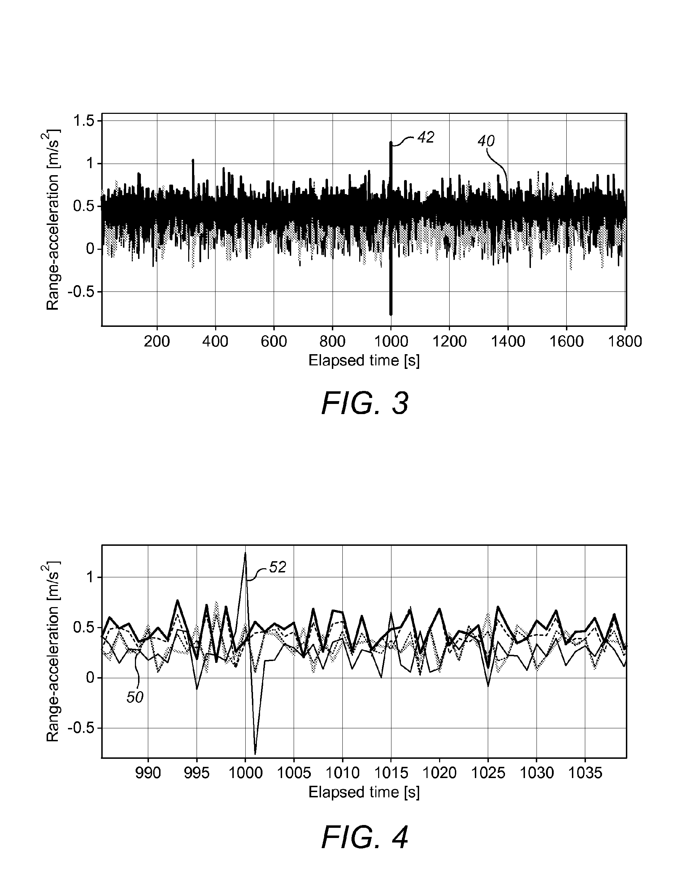

Figure 3 shows a graph of measured range-acceleration over time, between the satellite and receiver for satellite signals 30,32,34,36,38. The acceleration terms 40 of the satellite signals show an approximately constant, non-zero acceleration. The accelerations shown in Figure 2 correspond to the frequency offsets shown in Figure 2. The accelerations may be obtained by differentiating the frequency offset or phase.

At a time of 1000s, an increased acceleration peak 42 is shown. The peak 42 corresponds to the modification to signal 30 mentioned above. The modification is apparent when converted to the acceleration domain. The peak 42 exceeds a threshold value which is chosen appropriately, and so the receiver may take the configured action with regard to a non-authentic signal. Although the acceleration of signal 30 does not exceed the threshold value again, the single peak 42 is sufficient for the receiver 20 to disregard signal 30, sound an alarm, or carry out another process for a non-authentic signal.

Figure 4 shows an enlarged view of Figure 3. Acceleration peak 52 shows peak 42 in more detail, which has a higher positive and negative acceleration than the range of accelerations of the other signals 50.

The apparent relative velocity and acceleration between the satellite 10 and receiver 20 can be calculated by taking a plurality of counts of the number of wave cycles (phase) in a time interval. For phase $\Phi$ a velocity and acceleration can be obtained by any suitable algorithm, in particular, obtaining the derivative of phase with respect to time. Alternatively, the velocity or acceleration may be obtained by normalising the carrier phase observations with the time interval of the differenced observations or fitting a curve to successive phase measurements (delta-ranges) using polynomials of various orders.

An ideal digital differentiator can be written as:

$$H(e^{j\omega t}) = j\omega \ \ \text{for} \ \ 0 \le |\omega| \le \frac{\omega_s}{2}$$

where H is the differentiator, $\omega$ is the frequency, $\omega_s$ is the sampling frequency and T is the corresponding sampling period. To differentiate a discrete time signal, such as a satellite signal, a discrete time convolution can be used. In particular, the differentiator can be considered as a non-recursive or finite impulse response (FIR) filter. In practice, a FIR differentiator can be applied to a discrete data set, such as a carrier-phase time series $\Phi(t)$ (e.g. L1 in a GPS system), using a convolution:

$$\dot{\Phi}(t) = \sum_{k=0}^{N-1} h(k)\Phi(t-k)$$

where $\dot{\Phi}(t)$ is the derivative of the input signal $\Phi(t)$ at time t, and h is the impulse response with order (N-1). Used sequentially, this filter will create a time series of the carrier phase $\dot{\Phi}(t)$. Applying the same convolution again, the range acceleration is obtained:

$$\ddot{\Phi}(t) = \sum_{k=0}^{N-1} h(k)\dot{\Phi}(t-k)$$

Theoretically, the relationship between the impulse response h and the ideal digital generator is given by:

$$h(nT) = \frac{1}{\omega_s} \int_{-\omega_s/2}^{\omega_s/2} H(e^{j\omega t}) e^{j\omega t} d\omega$$

The design of the digital differentiator depends on the choice of the impulse response h and the order of the filter which is related to the length of the window. In order to generate range accelerations in real time, a low order filter may be used.
In particular, the derivative may be obtained numerically, by any known differentiator. The velocity and acceleration may be approximated using a central difference approximation (first order Taylor series), for time intervals $2\Delta t$:

$$\dot{\Phi}(t) \approx \frac{\Phi(t+\Delta t) - \Phi(t-\Delta t)}{2\Delta t}$$

$$\ddot{\Phi}(t) \approx \frac{\dot{\Phi}(t+\Delta t) - \dot{\Phi}(t-\Delta t)}{2\Delta t}$$

$$= \frac{\Phi(t + 2\Delta t) - 2\Phi(t) + \Phi(t - 2\Delta t)}{4\Delta t^2}$$

The use of the first order central difference approximation of the carrier phase rate is easy to implement and provides an appropriate acceleration estimate in relatively low dynamics environments.

The apparent relative acceleration is therefore accurately calculated using the carrier wave. The above analysis calculates the acceleration from the velocity. Alternatively, the acceleration can be calculated directly from a plurality of sets of phase shift and corresponding time intervals, without requiring calculation of velocity.

The receiver 20 may function as part of any global or local navigation satellite system, in particular one of the Global Positioning System (GPS), Galileo System, GLONASS or Chinese Compass Navigation System. The satellites may be in medium earth orbit or in a geo-stationary earth orbit, or may be in a low earth orbit, or may be in an inclined geosynchronous orbit, or any other highly predictable orbit.

The receiver 20 has been described as having a processor arrangement. The processor arrangement may comprise any suitable arrangement of processors, memory, input/output devices and other hardware, firmware or software as necessary. In particular, the processor arrangement comprises one or more digital signal processors. The processor arrangement is configured to digitally process part or the whole of the satellite signals to achieve the described functions.

The processor arrangement can be considered as functionally including an analyser configured to analyse the carrier wave to determine an apparent acceleration between the satellite and receiver, and a comparator to compare the apparent acceleration between the satellite and receiver with a threshold value to determine if the satellite signal is authentic. The processor arrangement can be considered as functionally including a positioning unit to calculate positions of the receiver determined using the positioning data, and calculate predicted velocity and acceleration of the receiver. The analyser, comparator and/or positioning unit, may be integrated together, and share common components. In particular, these units may be defined only by their function, and not by separate hardware. Any of the algorithms and processes above may be implemented on any suitable processor.

The receiver 20 is described as calculating a predicted velocity and acceleration, in order to calculate an offset acceleration used to determine whether a signal is authentic. Alternatively, the processor arrangement (comparator) of the receiver may determine authenticity only on the measured relative acceleration between satellite and receiver. The threshold value is determined accordingly, to exclude accelerations which may occur during normal operation of the satellite and receiver.

The predicted acceleration between the satellite and receiver has been described as including both a term for relative acceleration and a term for relative velocity. Alternatively, the predicted acceleration between the satellite and receiver may be calculated without the term for relative acceleration. The predicted acceleration between the satellite and receiver may be calculated without the term for predicted errors.

The receiver 20 has been described as configured to receive satellite signals and calculate position. Alternatively, the invention may relate to a receiver or module configured to be connected to a receiver configured to receive satellite signals and calculate position. The receiver or module includes processing arrangement configured to analyse the carrier wave to determine an apparent acceleration between the satellite and receiver, and compare the apparent acceleration between the satellite and receiver with a threshold value to determine if the satellite signal is authentic. The receiver or module may receive the satellite signals through an antenna or through a conventional receiver having an antenna. The receiver or module may have any of the features described in order to authenticate a satellite signal.

**Claims**

1. A receiver configured to authenticate received satellite signals having a carrier wave carrying positioning data, the receiver comprising:

   a processor arrangement configured to analyse the carrier wave to determine an apparent acceleration between the satellite and receiver, and
   the processor arrangement is further configured to compare the apparent acceleration between the satellite and receiver with a threshold value to determine if the satellite signal is authentic.

2. A receiver as claimed in claim 1 wherein the processor arrangement is configured to analyse the carrier wave to determine the apparent acceleration between the satellite and receiver by:

determining a plurality of timing points from the positioning data,
determining a plurality of counts of the number of wave cycles of the carrier wave between timing points,
determining the apparent acceleration between the satellite and receiver from the counts of the number of wave cycles or a related quantity.

3. A receiver as claimed in claim 2 wherein the apparent acceleration between the satellite and receiver is determined by calculating the second derivative with time of the counts of the number of wave cycles or a related quantity.

4. A receiver as claimed in any one of the preceding claims wherein the receiver is further configured to calculate a predicted acceleration between the satellite and receiver,
and calculate an offset acceleration based on the difference between the apparent acceleration and the predicted acceleration between the satellite and receiver; wherein the processor arrangement is configured to compare the offset acceleration with a threshold value to determine if the satellite signal is authentic.

5. A receiver as claimed in claim 4 wherein the predicted acceleration is calculated from:

a predicted velocity and acceleration of the satellite calculated from the positioning data received by the receiver, and
a predicted velocity and acceleration of the receiver calculated from positions of the receiver determined using the positioning data.

6. A receiver as claimed in claim 4 or claim 5 wherein the predicted acceleration includes predicted errors in one or more of the satellite, satellite signals and receiver.

7. A receiver as claimed in any one of the preceding claims wherein the receiver is further configured to disregard a satellite signal which is considered not to be authentic, and
to determine whether position of the receiver can be determined based on signals received from satellite signals other than the disregarded signal.

8. A receiver as claimed in any of the preceding claims wherein the threshold value is a selected predetermined value which is configurable.

9. A receiver as claimed in any of the preceding claims wherein the receiver is configured to compare the apparent acceleration determined at a rate of at least three times per second, and preferably, at a rate of at least five times per second, with the threshold value.

10. A method of authenticating a received satellite signal having a carrier wave carrying positioning data, comprising:

analysing the carrier wave to determine an apparent acceleration between the satellite and receiver, and
comparing the apparent acceleration between the satellite and receiver with a threshold value to determine if the satellite signal is authentic.

11. A method as claimed in claim 10 wherein analysing the carrier wave to determine the apparent acceleration between the satellite and receiver comprises:

determining a plurality of timing points from the positioning data,
determining a plurality of counts of the number of wave cycles of the carrier wave between timing points,
determining the apparent acceleration between the satellite and receiver from the counts of the number of wave cycles or a related quantity.

12. A method as claimed in claim 11 wherein the apparent acceleration between the satellite and receiver is determined by calculating the second derivative with time of the counts of the number of wave cycles or a related quantity.

13. A method as claimed in claim 10,11 or 12 comprising:

calculating a predicted acceleration between the satellite and receiver, and

calculating an offset acceleration based on the difference between the apparent acceleration and the predicted acceleration between the satellite and receiver; and

comparing the offset acceleration with the threshold value to determine if the satellite signal is authentic.

14. A method as claimed in claim 13 wherein the predicted acceleration is calculated from:

a predicted velocity and acceleration of the satellite calculated from the positioning data received by the receiver, and

a predicted velocity and acceleration of the receiver calculated from positions of the receiver determined using the positioning data.

15. A method as claimed in any one of claims 10 to 14 wherein the receiver disregards a satellite signal which is considered not to be authentic, and

determines whether position of the receiver can be based on signals received from satellite signals other than the disregarded signal.

FIG. 1

FIG. 2

*FIG. 3*

*FIG. 4*

Europäisches
Patentamt
European
Patent Office
Office européen
des brevets

**EUROPEAN SEARCH REPORT**

Application Number

EP 10 27 5005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/04451 A1 (ORBIT COMMUNICATIONS TRACKING [IL]; KOFFMAN ISRAEL [IL]; SHABIROW EREZ) 28 January 1999 (1999-01-28) * page 4, lines 5-9 * * page 7, line 15 - page 8, line 13 * * page 9, lines 3-5 * * page 13, line 9 - page 15, line 16 * ----- | 1,10 | INV. G01S19/13 |

TECHNICAL FIELDS SEARCHED (IPC)

G01S

The present search report has been drawn up for all claims

| Place of search | Date of completion of the search | Examiner |
|---|---|---|
| The Hague | 3 June 2010 | Naddeo, Giovanni |

**ANNEX TO THE EUROPEAN SEARCH REPORT
ON EUROPEAN PATENT APPLICATION NO.**

EP 10 27 5005

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2010

| Patent document cited in search report | Publication date | Patent family member(s) | Publication date |
|---|---|---|---|
| WO 9904451 A1 | 28-01-1999 | AU 3458097 A | 10-02-1999 |

For more details about this annex : see Official Journal of the European Patent Office, No. 12/82

EPO FORM P0459